# FASCICULE DE BREVET EUROPEEN

(11) **EP 3 589 977 B1**
(45) Date de publication et mention de la délivrance du brevet: **31.03.2021**
(21) Numéro de dépôt: 18709689.6
(22) Date de dépôt: 22.02.2018
(51) Int. Cl.: G01S 15/02, G01S 15/89, G01S 5/18, G01S 15/86, B23K 37/04

(54) **PROCÉDÉ DE MÉTROLOGIE COMBINÉE POUR LE CALCUL DE LA DISTANCE, DES ATTITUDES EN ROULIS ET TANGAGE ET DES ORIENTATIONS RELATIVES ENTRE DEUX POINTS D'INTÉRÊT SOUS-MARINS**
KOMBINIERTES METROLOGIEVERFAHREN ZUR BERECHNUNG VON ABSTAND, DREHUNGS- UND NEIGUNGSLAGEN UND RELATIVEN ORIENTIERUNGEN ZWISCHEN ZWEI UNTERWASSERPUNKTEN VON INTERESSE
COMBINED METROLOGY METHOD FOR COMPUTING DISTANCE, ROLL AND PITCH ATTITUDES AND RELATIVE ORIENTATIONS BETWEEN TWO UNDERWATER POINTS OF INTEREST

(30) Priorité: 03.03.2017 FR 1751744
(43) Date de publication de la demande: 08.01.2020
(73) Titulaire: SAIPEM S.A., 78180 Montigny Le Bretonneux (FR)
(72) Inventeur: GUILLOUX, Eric, 29300 Quimperlé (FR)
(74) Mandataire: Cabinet Beau de Loménie
(86) Numéro de dépôt international: PCT/FR2018/050428
(87) Numéro de publication internationale: WO 2018/158526

(56) Documents cités:
- WO-A1-02/063332
- WO-A1-2014/195610
- FR-A1- 2 320 862
- RENDULIC IVOR ET AL: "Estimating diver orientation from video using body markers", 2015 38TH INTERNATIONAL CONVENTION ON INFORMATION AND COMMUNICATION TECHNOLOGY, ELECTRONICS AND MICROELECTRONICS (MIPRO), MIPRO, 25 mai 2015 (2015-05-25), pages 1054-1059, XP033177008, DOI: 10.1109/MIPRO.2015.7160431

## Description

### Arrière-plan de l'invention

La présente invention se rapporte au domaine général de la métrologie sous-marine. Elle concerne plus précisément un procédé de métrologie permettant de calculer la distance, les attitudes en roulis et tangage et les orientations relatives entre deux points d'intérêt sous-marins.

Un domaine d'application non limitatif est celui du calcul de la distance, des attitudes en roulis et tangage et des orientations relatives entre les brides respectives de deux conduites reposant au fond de l'eau et qui sont utilisées pour le transport d'hydrocarbures, par exemple de pétrole et de gaz, issus de puits de production sous-marins.

Dans le domaine du transport sous-marin d'hydrocarbures, il est connu de recourir à des connecteurs pour raccorder entre elles deux conduites déposées au fond de l'eau. Ces connecteurs sont des structures immergées qui se présentent sous la forme de conduites pouvant s'étendre horizontalement en reposant sur le fond marin (cas des « spools ») ou s'étendre verticalement au-dessus du fond marin (cas des « jumpers »).

Pour déterminer la forme et les dimensions exactes de ces connecteurs, il est nécessaire au préalable de connaître avec précision la distance, les attitudes en roulis et tangage et les orientations relatives entre les brides respectives des deux conduites ou structures reposant au fond de l'eau et que doivent raccorder les connecteurs. La technique généralement utilisée pour réaliser ces mesures est celle de la métrologie sous-marine.

Il existe différents types de procédés de métrologie sous-marine utilisés pour le calcul de la distance, des attitudes en roulis et tangage et des orientations relatives entre les brides respectives des deux conduites à raccorder. Le procédé de métrologie le plus répandu est celui basé sur un réseau de balises acoustiques déployées sur le fond marin (appelé LBL pour « Long BaseLine » en anglais). Ce système acoustique LBL détermine la position d'un point d'intérêt sous-marin en mesurant de manière acoustique la distance entre le point d'intérêt et trois (ou plus) balises acoustiques déployées sur le fond marin. Les balises permettant d'obtenir des distances, il est nécessaire de compléter celles-ci par des mesures d'attitudes et d'orientation par l'intermédiaire de gyroscopes et d'inclinomètres déployés sur les structures marines sur des points prédéfinis.

Les résultats obtenus par ce procédé basé sur un réseau LBL sont généralement précis. En revanche, les balises acoustiques utilisées sont sensibles au bruit sous-marin et la mise en œuvre de ce procédé nécessite beaucoup de temps. De plus, ce procédé nécessite une préparation à terre afin de déterminer les décalages entre les points de mesures et les points d'intérêts réels (à savoir le centre des brides des conduites à relier).

Un autre procédé connu de métrologie sous-marine met en œuvre des systèmes de navigation inertiels utilisant des accéléromètres et des gyroscopes pour déterminer les distances et attitudes des brides respectives des deux conduites.

L'avantage principal de ce type de procédé est qu'il n'est affecté ni par les éventuelles mauvaises conditions de visibilité sous-marine, ni par le bruit sous-marin environnant. En revanche, les systèmes de navigation inertiels utilisés par ce procédé présentent des problèmes de dérive de leurs capteurs, ces dérives devant ensuite être corrigées par hybridation avec un système de positionnement acoustique. De plus, les mesures d'attitudes ne peuvent être obtenues que par contact avec les structures

Les documents WO02/063332A1, WO2014/195610A1 et FR2320862A1 divulguent également des procédés selon l'état de la technique.

### Objet et résumé de l'invention

La présente invention a donc pour but de proposer un procédé de métrologie qui ne présente pas les inconvénients précités.

Conformément à l'invention, ce but est atteint grâce à un procédé de métrologie combinée pour le calcul de la distance, des attitudes en roulis et tangage et des orientations relatives entre deux points d'intérêt sous-marins, comprenant successivement :
le positionnement sur le fond marin d'un réseau de balises acoustiques d'un système de positionnement acoustique à longue distance avec le déploiement d'au moins trois balises acoustiques autour de chaque point d'intérêt et le déploiement de deux balises acoustiques supplémentaires ;
la calibration du système de positionnement acoustique à longue distance pour déterminer les positions relatives ou absolues des balises acoustiques entre elles ;
le déploiement sur le fond marin d'un véhicule sous-marin muni de moyens d'acquisition de nuages de points ;
la réalisation par le véhicule sous-marin de plusieurs scènes autour de chaque point d'intérêt pour acquérir une pluralité de nuages de points comprenant chacun des points représentatifs d'un point d'intérêt et des points représentatifs d'au moins deux balises acoustiques déployées autour dudit point d'intérêt ;
le traitement des nuages de points pour calculer les coordonnées des points dans un même repère défini par le réseau de balises acoustiques et centré sur la position de l'une des balises acoustiques ; et
le calcul de la distance, des attitudes en roulis et tangage et des orientations relatives entre les deux points d'intérêt à partir des coordonnées des points de l'ensemble des scènes dans le repère défini par le réseau de balises acoustiques.

Le procédé de métrologie selon l'invention présente de nombreux avantages par rapport aux procédés de l'art antérieur. En particulier, ce procédé est remarquable en ce qu'il combine des moyens d'acquisition longue distance (à savoir le système de positionnement acoustique formé par le réseau de balises acoustiques) avec des moyens d'acquisition courte distance (à savoir les moyens d'acquisition équipant le véhicule sous-marin). Ainsi, ce procédé permet de diminuer les temps d'acquisition des mesures, ne nécessite pas de pré-installation de support sur les points d'intérêt pour y fixer les appareils de mesures, et ne requiert aucun contact avec les structures lors des prises de mesures.

De plus, étant donné que la mesure ne concerne pas un unique point comme pour les procédés à balises acoustiques ou à systèmes de navigation inertiels mais un nuage de points, la redondance de mesures obtenues permet d'obtenir un bien meilleur contrôle qualité. Enfin, ce procédé évite le recours à des cheminements (tels que mis en œuvre dans des procédés de l'art antérieur de photogrammétrie et de laser), ce qui permet d'obtenir une meilleure précision des mesures.

Le traitement des nuages de points comprend avantageusement l'application d'une matrice de transformation 3D pour obtenir les coordonnées desdits points dans le repère défini par le réseau de balises acoustiques. Dans ce cas, l'application de la matrice de transformation 3D peut comprendre l'application d'une matrice de translation et l'application d'une matrice de rotation.

De façon avantageuse, le procédé comprend en outre, préalablement au traitement des nuages de points, la fusion des nuages de points associés à chaque point d'intérêt.

Les balises acoustiques du système de positionnement acoustique à longue distance comprennent avantageusement chacune des moyens d'émission et de réception de signaux acoustiques.

Les coordonnées des points des nuages de points et les coordonnées des points représentatifs des balises acoustiques associés à chaque point d'intérêt sont avantageusement connues dans un repère absolu ou relatif associé aux balises acoustiques déployées autour dudit point d'intérêt.

Le véhicule sous-marin peut comprendre un scanner acoustique, un scanner à laser ou un appareil de photogrammétrie pour acquérir des nuages de points.

L'invention a aussi pour objet l'application du procédé tel que défini précédemment au calcul de la distance, des attitudes en roulis et tangage et des orientations relatives entre deux brides de conduites sous-marines de transport de fluides. Dans ce cas, l'une des trois balises acoustiques déployées pour chaque bride de conduite peut être positionnée sur ladite bride de conduite à des fins de contrôle qualité.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est un ordinogramme montrant les principales étapes du procédé de métrologie sous-marine selon l'invention ;
- la figure 2 est un exemple d'application du procédé de métrologie sous-marine selon l'invention au calcul de la distance, des attitudes et des orientations relatives entre deux brides de conduites sous-marines de transport de fluides ; et
- la figure 3 montre le déploiement d'un véhicule sous-marin muni d'un capteur de nuages de points pour la mise en œuvre du procédé de la figure 2.

### Description détaillée de l'invention

L'invention concerne un procédé de métrologie permettant de calculer la distance, les attitudes en roulis et tangage, et les orientations relatives entre deux points d'intérêt sous-marins.

Un exemple non limitatif d'application concerne le calcul de la distance et des orientations relatives entre les brides respectives (c'est-à-dire les extrémités respectives) de deux conduites sous-marines de transport de fluides posées au fond de la mer et que l'on cherche à raccorder l'une à l'autre par un « spool » ou un « jumper ».

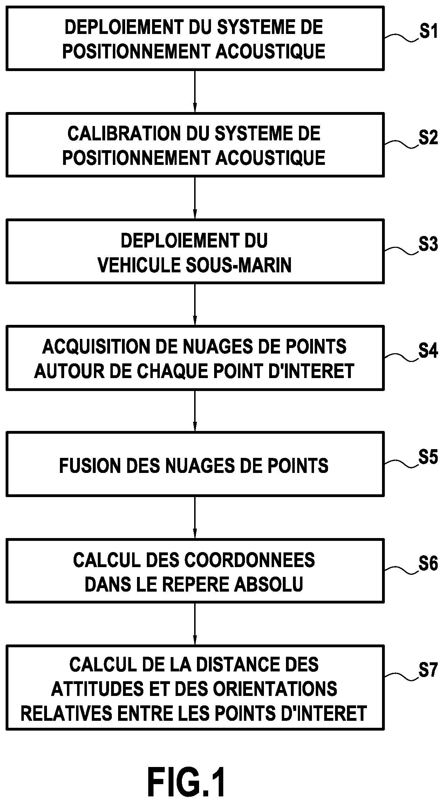

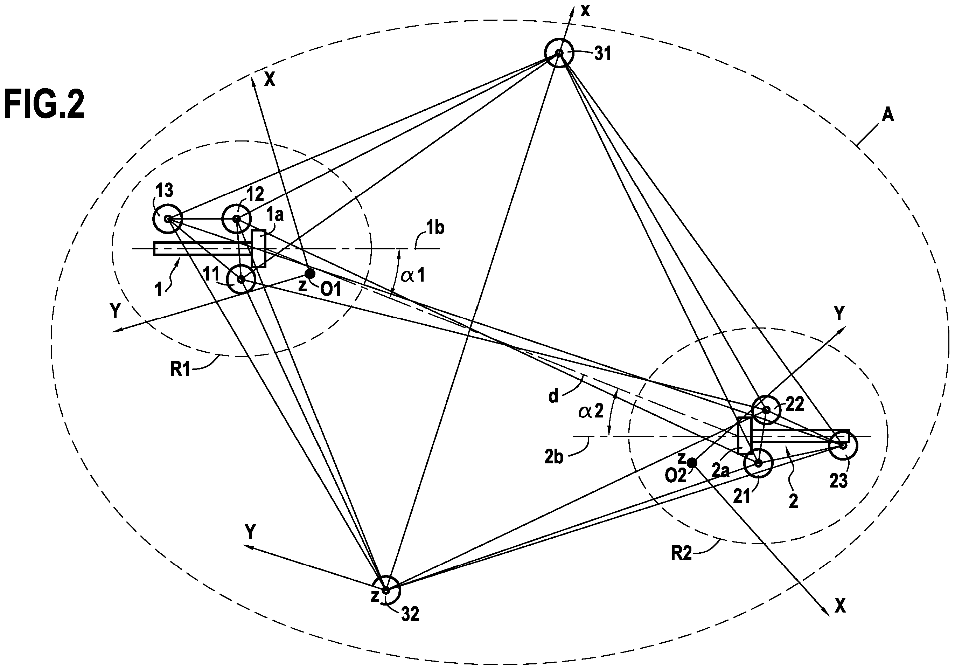

En liaison avec les figures 1 et 2, on décrira les principales étapes de mise en œuvre du procédé de métrologie selon l'invention appliqué au calcul de la distance d, des attitudes en tangage β1, β2 et roulis γ1, γ2, et des orientations relatives α1, α2 entre les brides respectives 1a, 2a de deux conduites sous-marines 1, 2 de transport de fluides.

Par orientation, on entend ici l'angle α1, α2 formé entre l'axe longitudinal respectif 1b, 2b de la conduite sous-marine et la droite d reliant les centres respectifs des brides des deux conduites sous-marines (voir la figure 2).

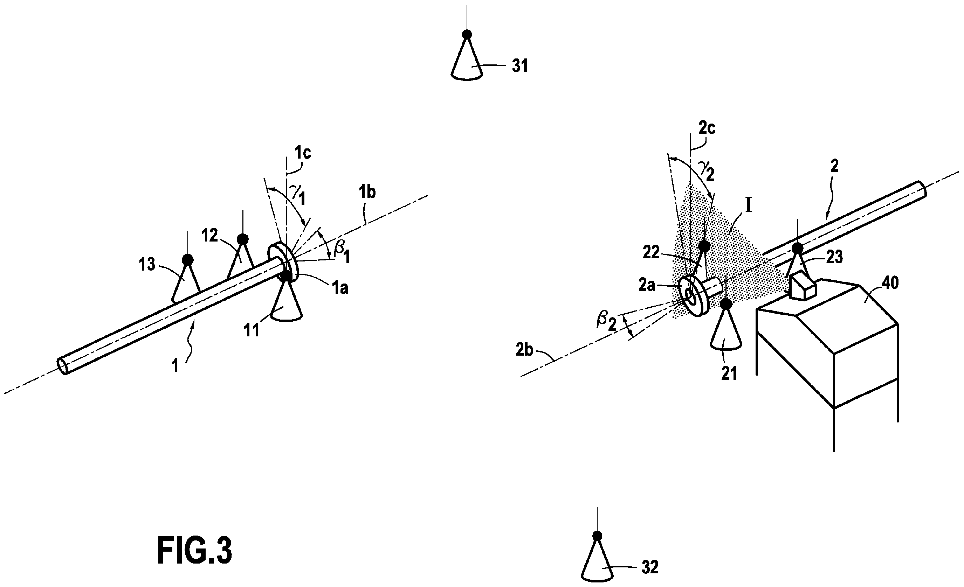

Par attitude en roulis, on entend ici l'angle de rotation γ1, γ2 autour de l'axe longitudinal respectif 1b, 2b des conduites traduisant les mouvements latéraux de droite à gauche des brides des conduites. Par attitude en tangage, on entend ici l'angle de rotation β1, β2 autour d'un axe transversal 1c, 2c perpendiculaire à l'axe longitudinal respectif 1b, 2b des conduites traduisant les mouvements d'avant en arrière des brides des conduites. Ces angles de rotation sont illustrés sur la figure 3.

Selon une première étape S1 du procédé, on positionne sur le fond marin un réseau de balises acoustiques d'un système de positionnement acoustique à longue distance (appelé LBL pour « Long BaseLine » en anglais). Ce système connu de positionnement acoustique LBL est un réseau géodésique de portée limitée et temporaire dans lequel chaque balise acoustique est positionnée par mesure de distance avec les autres balises et ayant ses coordonnées connues dans ce même repère géodésique.

A cet effet, on déploie sur le fond marin au moins trois balises acoustiques 11, 12, 13 autour de la bride la de la conduite 1, au moins trois autres balises acoustiques 21, 22, 23 autour de la bride 2a de la conduite 2, et deux balises acoustiques supplémentaires 31, 32.

De préférence, dans l'exemple d'application de l'invention, l'une des trois balises acoustiques déployées pour chaque bride sera positionnée à proximité immédiate de cette dernière (sur l'exemple de la figure 2, il s'agit des balises acoustiques 11 et 21) afin d'assurer un contrôle qualité des mesures.

De façon connue pour un système de positionnement acoustique LBL, les balises acoustiques 11, 12, 13, 21, 22, 23 et 31, 32 comprennent chacune des moyens d'émission et de réception de signaux acoustiques et elles sont positionnées les unes par rapport aux autres de façon à ce que leurs lieux de positionnement se croisent selon un angle supérieur à 30°. De plus, certaines balises sont équipées d'un capteur de pression permettant de définir un plan de référence commun sur l'axe du Z.

Toujours de façon connue, le système de positionnement acoustique LBL permet de définir un repère général en trois dimensions qui est relatif ou absolu et qui couvre l'ensemble de la zone et notamment les deux brides 2a, 2b et l'ensemble des balises acoustiques 11, 12, 13, 21, 22, 23, 31 et 32.

Le repère général est dit « relatif » lorsqu'il est obtenu à partir d'une mesure de distance entre deux balises, l'une de ces deux balises constituant le centre du repère et l'axe reliant ces deux balises entre elles constituant l'un des axes.

La figure 2 illustre un exemple d'un tel repère général relatif A (32, X, Y, Z). Ce repère A est défini à partir des deux balises supplémentaires 31, 32, la balise 32 définissant le centre du repère et l'axe reliant les balises 31, 32 entre elles constituant l'axe des X.

Alternativement, le repère est dit « absolu » lorsqu'il est obtenu à partir d'un système de coordonnées absolu rattaché à un système de coordonnées terrestre (par exemple au système de géolocalisation par satellite GPS pour « Global Positioning System »).

Selon une deuxième étape S2 du procédé, le système de positionnement acoustique ainsi déployé est calibré.

De façon connue, la calibration du réseau consiste à effectuer les mesures de distances entre les balises acoustiques, à calculer la position de chaque balise dans le repère absolu ou relatif préalablement défini, et à ajuster le réseau. L'ajustement du réseau s'effectue au moyen d'un logiciel adéquat mettant en œuvre la méthode des moindres carrés afin d'affiner la position de chaque balise.

Une fois le système de positionnement acoustique calibré, l'étape S3 suivante du procédé consiste à déployer sur le fond marin un véhicule sous-marin muni de moyens d'acquisition de nuages de points.

De manière générale, ces moyens d'acquisition de nuages de points sont constitués par tout type d'appareil permettant l'obtention en temps réel ou en différé d'un nuage de points, notamment les scanners à laser, les scanners acoustiques et les appareils de photogrammétrie.

De plus, le véhicule sous-marin comprend en outre des moyens de mesure de la vitesse du son dans l'eau. Ces moyens de mesure de la vitesse du son dans l'eau sont utilisés pour obtenir une vitesse précise de la propagation du son et ainsi permettre d'ajuster ce paramètre pour les moyens de mesure utilisés tels que les scanners acoustiques ou les appareils de mesure des distances inter-balises.

Au cours de l'étape S4 suivante, il est prévu de réaliser, par l'intermédiaire du véhicule sous-marin, plusieurs scènes (ou stations) autour de chaque bride 1a, 2a des conduites 1, 2 de façon à acquérir une pluralité de nuages de points autour de ces brides. La figure 3 représente un exemple de prise de scène I autour de la bride 2a de la conduite 2.

Le véhicule sous-marin effectue ces stations d'acquisition en étant stabilisé sur le fond marin autour de chaque bride de conduite. Les différents emplacements de ces stations d'acquisition sont préalablement définis et programmés pour permettre que chaque nuage de points obtenu comprenne nécessairement des points représentatifs de la bride visée et d'au moins deux balises acoustiques déployées autour de celle-ci. Ainsi, sur l'exemple de la figure 3, l'image I comprend des points représentatifs de la bride 2a et des balises acoustiques 21 et 23.

De la sorte, les coordonnées des points des nuages de points ainsi acquis et les coordonnées des points représentatifs des balises acoustiques déployées autour de la bride sont connues dans le repère général A (32, X, Y, Z) absolu ou relatif défini par le système de positionnement acoustique LBL.

De même, pour chaque scène, les coordonnées des points des nuages de points et les coordonnées des points représentatifs des balises acoustiques déployées autour de la bride correspondante sont connues dans un repère particulier centré sur la position du capteur de nuages de points équipant le véhicule sous-marin lors de ladite scène.

L'ensemble des coordonnées des points des nuages de points acquis lors des différentes scènes du véhicule sous-marin sont stockées dans une mémoire.

Au cours d'une étape S5, les différents nuages de points acquis pour chaque bride de conduite sont importés dans un logiciel de traitement de nuages de points pour être fusionnés et former un seul et unique nuage de points associé à chaque bride de conduite.

Une fois les différents nuages de points autour de la zone englobant chaque bride de conduite fusionnés, on obtient un ensemble de points dont les coordonnées sont connues dans un repère relatif global R1 (O1, X, Y, Z), R2 (O2, X, Y, Z) associé à chaque bride de conduite et généralement centré sur la position du capteur de nuages de points équipant le véhicule sous-marin lors de la première scène.

Pour chaque bride de conduite, l'étape S6 suivante consiste à calculer les coordonnées des points de l'ensemble des nuages de points ainsi fusionnées dans le repère général A (32, X, Y, Z) centré sur la position de l'une des deux balises acoustiques supplémentaires (à savoir ici la balise acoustique 32).

Ce calcul comprend l'application d'une matrice connue de transformation 3D aux points de l'ensemble des nuages de points pour obtenir les coordonnées desdits points dans le repère général A (32, X, Y, Z).

Plus précisément, la matrice de transformation comprend typiquement une matrice de translation et une matrice de rotation. Les points d'appui de cette matrice de rotation sont les balises acoustiques qui sont situées autour de chaque bride et dont les coordonnées sont connues à la fois dans le repère général A (32, X, Y, Z) et dans le repère global R1 (O1, X, Y, Z), R2 (O2, X, Y, Z) associé à chaque bride.

De façon connue, à partir des coordonnées connues d'un point dans un premier repère, une telle matrice de transformation permet d'obtenir les coordonnées du même point dans un second repère différent du premier.

A l'issue de cette étape de calcul, on obtient les coordonnées des points de l'ensemble des nuages de points acquis autour des zones englobant chaque bride de conduite dans le repère général A (32, X, Y, Z) centré sur la position de l'une des deux balises acoustiques supplémentaires.

Une fois les coordonnées de l'ensemble des points connus dans le repère général A (32, X, Y, Z), le procédé prévoit alors, lors d'une étape S7, de calculer, à l'aide d'un logiciel adéquat, la distance d, les attitudes en tangage γ1, γ2 et roulis β1, β2, et les orientations relatives α1, α2 entre les brides respectives 1a, 2a de deux conduites sous-marines 1, 2.

## Revendications

1. Procédé de métrologie combinée pour le calcul de la distance, des attitudes en roulis et tangage et des orientations relatives entre deux points d'intérêt sous-marins, comprenant successivement :
le positionnement (S1) sur le fond marin d'un réseau de balises acoustiques d'un système de positionnement acoustique à longue distance avec le déploiement d'au moins trois balises acoustiques (11, 12, 13, 21, 22, 23) autour de chaque point d'intérêt (la, 2a) et le déploiement de deux balises acoustiques supplémentaires (31, 32) ;
la calibration (S2) du système de positionnement acoustique à longue distance pour déterminer les positions relatives ou absolues des balises acoustiques entre elles ;
le déploiement (S3) sur le fond marin d'un véhicule sous-marin (40) muni de moyens d'acquisition de nuages de points ;
la réalisation (S4) par le véhicule sous-marin de plusieurs scènes autour de chaque point d'intérêt pour acquérir une pluralité de nuages de points (I) comprenant chacun des points représentatifs d'un point d'intérêt et des points représentatifs d'au moins deux balises acoustiques déployées autour dudit point d'intérêt ;
le traitement (S5) des nuages de points pour calculer (S6) les coordonnées des points dans un même repère A (32, X, Y, Z) défini par le réseau de balises acoustiques et centré sur la position de l'une des balises acoustiques ; et
le calcul (S7) de la distance (d), des attitudes en roulis (β1, β2) et tangage (γ1, γ2) et des orientations relatives (α1, α2) entre les deux points d'intérêt à partir des coordonnées des points de l'ensemble des images dans le repère défini par le réseau de balises acoustiques.

2. Procédé selon la revendication 1, dans lequel le traitement des nuages de points comprend l'application d'une matrice de transformation 3D pour obtenir les coordonnées desdits points dans le repère défini par le réseau de balises acoustiques.

3. Procédé selon la revendication 2, dans lequel l'application de la matrice de transformation 3D comprend l'application d'une matrice de translation et l'application d'une matrice de rotation.

4. Procédé selon l'une quelconque des revendications 1 à 3, comprenant en outre, préalablement au traitement des nuages de points, la fusion des nuages de points associés à chaque point d'intérêt.

5. Procédé selon l'une quelconque des revendications 1 à 4, dans lequel les balises acoustiques du système de positionnement acoustique à longue distance comprennent chacune des moyens d'émission et de réception de signaux acoustiques.

6. Procédé selon l'une quelconque des revendications 1 à 5, dans lequel les coordonnées des points des nuages de points et les coordonnées des points représentatifs des balises acoustiques associés à chaque point d'intérêt sont connues dans un repère absolu ou relatif associé aux balises acoustiques déployées autour dudit point d'intérêt

7. Procédé selon l'une quelconque des revendications 1 à 6, dans lequel le véhicule sous-marin comprend un scanner acoustique, un scanner à laser ou un appareil de photogrammétrie pour acquérir des nuages de points.

8. Application du procédé selon l'une quelconque des revendications 1 à 7 au calcul de la distance, des attitudes en roulis et tangage et des orientations relatives entre deux brides (la, 2a) de conduites sous-marines (1, 2) de transport de fluides.

9. Application selon la revendication 8, dans laquelle l'une des trois balises acoustiques déployées pour chaque bride de conduite est positionnée sur ladite bride de conduite à des fins de contrôle qualité.

## Patentansprüche

1. Kombiniertes metrologisches Verfahren zur Berechnung der Distanz, der Drehungs- und Neigungslagen sowie der relativen Orientierungen zwischen zwei unterseeischen Punkten von Interesse, umfassend der Reihe nach:
die Positionierung (S1) eines Netzes von akustischen Signalgebern eines akustischen Ortungssystems über große Distanzen auf dem Meeresboden, mit der Ausbringung von zumindest drei akustischen Signalgebern (11, 12, 13, 21, 22, 23) um jeden Punkt von Interesse (1a, 2a) und der Ausbringung von zwei zusätzlichen akustischen Signalgebern (31, 32),
die Kalibrierung (S2) des akustischen Ortungssystems über große Distanzen, um die relativen oder absoluten Positionen der akustischen Signalgeber zwischen einander zu bestimmen,
die Ausbringung (S3) eines unterseeischen Fahrzeugs (40) auf dem Meeresboden, das mit Mitteln zur Erfassung von Punktwolken ausgestattet ist,
die Erstellung (S4) mehrerer Szenarien durch das unterseeische Fahrzeug um jeden Punkt von Interesse herum, um mehrere Punktwolken (I) zu erfassen, die jeweils für einen Punkt von Interesse repräsentative Punkte und repräsentative Punkte von zumindest zwei akustischen Signalgebern, die um den Punkt von Interesse herum ausgebracht wurden, umfassen,
die Verarbeitung (S5) der Punktwolken, um die Koordinaten von Punkten in einem selben Bereich A (32, X, Y, Z) zu berechnen (S6), der durch das Netz von akustischen Signalgebern definiert und an der Position von einem der akustischen Signalgeber zentriert ist, und
die Berechnung (S7) der Distanz (d), der Drehungs- (β1, β2) und Neigungslagen (γ1, γ2) und der relativen Orientierungen (α1, α2) zwischen den zwei Punkten von Interesse ausgehend von den Koordinaten der Punkte der Menge von Bildern in dem Bereich, der durch das Netz von akustischen Signalgebern definiert wird.

2. Verfahren nach Anspruch 1, wobei die Verarbeitung der Punktwolken die Anwendung einer 3D-Transformationsmatrix umfasst, um die Koordinaten der Punkte in dem Bereich, der durch das Netz von akustischen Signalgebern definiert wird, zu erhalten.

3. Verfahren nach Anspruch 2, wobei die Anwendung der 3D-Transformationsmatrix die Anwendung einer Verschiebungsmatrix und die Anwendung einer Drehungsmatrix umfasst.

4. Verfahren nach einem der Ansprüche 1 bis 3, umfassend ferner die Fusion von Punktwolken, die mit jedem Punkt von Interesse assoziiert sind, vor der Verarbeitung der Punktwolken.

5. Verfahren nach einem der Ansprüche 1 bis 4, wobei die akustischen Signalgeber des akustischen Ortungssystems über große Distanzen jeweils Mittel zum Aussenden und Empfangen von akustischen Signalen umfassen.

6. Verfahren nach einem der Ansprüche 1 bis 5, wobei die Koordinaten von Punkten der Punktwolken und die Koordinaten von Punkten, die für die akustischen Signalgeber repräsentativ sind, die mit jedem Punkt von Interesse assoziiert sind, in einem absoluten oder relativen Bereich, der mit den akustischen Signalgebern assoziiert ist, die um jeden Punkt von Interesse herum ausgebracht wurden, bekannt sind.

7. Verfahren nach einem der Ansprüche 1 bis 6, wobei das unterseeische Fahrzeug einen akustischen Scanner, einen Laserscanner oder eine fotogrammetrische Vorrichtung zum Erfassen der Punktwolken umfasst.

8. Anwendung des Verfahrens nach einem der Ansprüche 1 bis 7 auf die Berechnung der Distanz, der Drehungs- und Neigungslagen sowie der relativen Orientierungen zwischen zwei Flanschen (1a, 2a) von unterseeischen Leitungen (1, 2) für den Transport von Fluiden.

9. Anwendung nach Anspruch 8, bei welcher einer der drei ausgebrachten akustischen Signalgeber für jeden Leitungsflansch auf dem Leitungsflansch zum Zweck der Qualitätskontrolle positioniert wird.

## Claims

1. A combined metrology method for calculating the distance, the roll and pitch attitudes, and the relative orientations between two undersea points of interest, the method comprising in succession:
- positioning (S1) on the sea bottom an array of acoustic beacons of a long-range acoustic positioning system, with at least three acoustic beacons (11, 12, 13, 21, 22, 23) being deployed around each point of interest (la, 2a) and with two additional acoustic beacons (31, 32) also being deployed;
- calibrating (S2) the long-range acoustic positioning system in order to determine the relative or absolute positions of the acoustic beacons relative to one another;
- deploying (S3) on the sea bottom an undersea vehicle (40) provided with point cloud acquisition means;
- using the undersea vehicle to take (S4) a plurality of scenes around each point of interest in order to acquire a plurality of point clouds (I), each comprising points representative of a point of interest and also points representative of at least two acoustic beacons deployed around said point of interest;
- processing (S5) the point clouds in order to calculate (S6) the coordinates of the points in a common reference frame A (32, X, Y, Z) defined by the array of acoustic beacons and centered on the position of one of the acoustic beacons; and
- calculating (S7) the distance (d), the roll and pitch attitudes (β1, β2; γ1, γ2), and the relative orientations (α1, α2) between the two points of interest on the basis of the coordinates for the points of the set of images in the reference frame defined by the array of acoustic beacons.

2. A method according to claim 1, wherein the processing of the point clouds comprises applying a 3D transformation matrix in order to obtain the coordinates of said points in the reference frame defined by the array of acoustic beacons.

3. A method according to claim 2, wherein applying the 3D transformation matrix comprises applying a translation matrix and applying a rotation matrix.

4. A method according to any one of claims 1 to 3, further comprising, prior to processing the point clouds, merging the point clouds associated with each point of interest.

5. A method according to any one of claims 1 to 4, wherein each of the acoustic beacons of the long-range acoustic positioning system comprises means for emitting and receiving acoustic signals.

6. A method according to any one of claims 1 to 5, wherein the coordinates of the points in the point clouds and the coordinates of points representative of the acoustic beacons associated with each point of interest are known in an absolute or relative reference frame associated with the acoustic beacons deployed around said point of interest.

7. A method according to any one of claims 1 to 6, wherein the undersea vehicle includes an acoustic scanner, a laser scanner, or a photogrammetric camera for acquiring the point clouds.

8. The application of the method according to any one of claims 1 to 7 for calculating the distance, the roll and pitch attitudes, and the relative orientations between two flanges (la, 2a) of undersea pipes (1, 2) for transporting fluids.

9. An application according to claim 8, wherein one of the three acoustic beacons deployed for each pipe flange is positioned on said pipe flange for quality control purposes.
